# EUROPÄISCHE PATENTANMELDUNG

(11) **EP 1 686 723 A1**
(43) Veröffentlichungstag der Anmeldung: **02.08.2006**
(21) Anmeldenummer: 05090012.5
(22) Anmeldetag: 28.01.2005
(51) Int. Cl.: H04L 12/14, G07F 19/00

(54) **Verfahren und server zum Übertragen von Daten**

(71) Anmelder: SIEMENS AKTIENGESELLSCHAFT, 80333 München (DE)
(72) Erfinder: Karsten, Lüttge, 10318 Berlin (DE); Enric, Mitjana, 81369 München (DE)

(57) **Zusammenfassung**

Die Erfindung betrifft ein Verfahren zum Übertragen von einen Zahlvorgang betreffenden Daten von einem mobilen Kommunikationsendgerät (KEG) zu einem Zahlungssystem (ZS1, ZS2) eines Kommunikationsnetzes (GPRS), wobei bei dem Verfahren von einem Server (S) des Kommunikationsnetzes unter Nutzung eines ersten Kommunikationsprotokolls (OTA) Zahlungsdaten empfangen werden, welche von einem auf dem Kommunikationsendgerät laufenden Anwendungsprogramm (A) stammen. Von dem Server werden das Kommunikationsendgerät und das Anwendungsprogramm (A) erkannt. Von dem Server werden unter Nutzung eines zweiten Kommunikationsprotokolls die Zahlungsdaten an das Zahlungssystem (ZS2) übertragen. Weiterhin werden von dem Server das Kommunikationsendgerät kennzeichnende Endgerätedaten an das Zahlungssystem übertragen, wodurch das Zahlungssystem über den Zahlungsschuldner informiert wird. Von dem Server werden auch das Anwendungsprogramm kennzeichnende Programmdaten an das Zahlungssystem übertragen, wodurch das Zahlungssystem über den Zahlungsempfänger informiert wird. Weiterhin betrifft die Erfindung einen Server.

## Beschreibung

Die Erfindung betrifft ein Verfahren und einen Server zum Übertragen von einen Zahlvorgang betreffenden Daten von einem mobilen Kommunikationsendgerät zu einem Zahlungssystem eines Kommunikationsnetzes.

Mittels moderner Telekommunikationstechnik werden Telekommunikationsteilnehmern bereits heute eine Vielzahl von Diensten, Anwendungen oder Leistungen angeboten, deren Nutzung zu bezahlen ist. In Zukunft werden bei solchen Diensten, Anwendungen oder Leistungen häufig auch Anwendungsprogramme beteiligt sein, welche in Kommunikationsendgeräten (z. B. in Mobiltelefonen) installiert oder in Kommunikationsendgeräte geladen werden und in diesen Kommunikationsendgeräten ablaufen.

Der Erfindung liegt die Aufgabe zugrunde, ein Verfahren und einen Server anzugeben, mit denen einen Zahlvorgang betreffende Daten, welche von einem auf einem mobilen Kommunikationsendgerät laufenden Anwendungsprogramm stammen, von dem Kommunikationsendgerät zu einem Zahlungssystem übertragen werden können.

Diese Aufgabe wird erfindungsgemäß gelöst durch ein Verfahren zum Übertragen von einen Zahlvorgang betreffenden Daten von einem mobilen Kommunikationsendgerät zu einem Zahlungssystem eines Kommunikationsnetzes, wobei bei dem Verfahren von einem Server des Kommunikationsnetzes unter Nutzung eines ersten Kommunikationsprotokolls Zahlungsdaten empfangen werden, welche von einem auf dem Kommunikationsendgerät laufenden Anwendungsprogramm stammen, von dem Server das Kommunikationsendgerät erkannt wird, von dem Server das Anwendungsprogramm erkannt wird, von dem Server unter Nutzung eines zweiten Kommunikationsprotokolls die Zahlungsdaten an das Zahlungssystem übertragen werden, von dem Server das Kommunikationsendgerät kennzeichnende Endgerätedaten an das Zahlungssystem übertragen werden, wodurch das Zahlungssystem über den Zahlungsschuldner informiert wird, und von dem Server das Anwendungsprogramm kennzeichnende Programmdaten an das Zahlungssystem übertragen werden, wodurch das Zahlungssystem über den Zahlungsempfänger informiert wird.

Hierbei ist insbesondere vorteilhaft, dass die von dem Server unter Nutzung eines ersten Kommunikationsprotokolls empfangenden Zahlungsdaten unter Nutzung eines zweiten Kommunikationsprotokolls an das Zahlungssystem übertragen werden. Durch die Verwendung verschiedener Protokolle wird das Zahlungssystem vor unzulässigen oder unberechtigten Zugriffen seitens des Kommunikationsendgerätes geschützt, wodurch die Sicherheit des Zahlungssystems beträchtlich erhöht wird. Weiterhin ist vorteilhaft, dass von dem Server das Kommunikationsendgerät erkannt (identifiziert) wird und dass das Kommunikationsendgerät kennzeichnende Daten (Endgerätedaten) zu dem Zahlungssystem übertragen werden. Dadurch wird das Zahlungssystem über den Zahlungsschuldner informiert, da mit Identifizierung des Kommunikationsendgeräts auch dessen Betreiber oder Nutzer identifiziert wird. Der Betreiber oder Nutzer ist für die mit seinem Kommunikationsendgerät verursachten Zahlungen verantwortlich. Zusätzlich wird vorteilhafterweise von dem Server das Anwendungsprogramm erkannt (identifiziert) und das Anwendungsprogramm kennzeichnende Daten (Programmdaten) zu dem Zahlungssystem übertragen. Damit wird dem Zahlungssystem der Zahlungsempfänger bekannt, weil bei Kenntnis des Anwendungsprogramms auf die Art der programmierten Anwendung und auf den Anbieter oder Herausgeber des Anwendungsprogramms geschlossen werden kann; der Anbieter oder Herausgeber des Anwendungsprogramms ist hierbei der Zahlungsempfänger. Das Anwendungsprogramm ist also dem Zahlungsempfänger zugeordnet.
Ein weiterer Vorteil besteht darin, daß das Zahlungssystem nicht speziell dafür ausgelegt sein muß, Zahlungsdaten direkt von dem auf dem Kommunikationsendgerät ablaufenden Anwendungsprogramm zu empfangen. Das Zahlungssystem braucht daher auch keine Mechanismen bereitzustellen, um das Kommunikationsendgerät (bzw. dessen Nutzer) und/oder das die Zahlungsdaten sendende Anwendungsprogramm zu identifizieren und die erkannte Identität zuverlässig zu überprüfen (Authentisierung). Dadurch wird es insbesondere ermöglicht, das Verfahren auch in Telekommunikationsumgebungen einzusetzen, die ursprünglich nicht ausgelegt waren zum Empfang von Zahlungsdaten, welche von einem auf einem Kommunikationsendgerät ablaufenden Anwendungsprogramm ausgesendet werden und mittels elektromagnetischer Funkwellen über die "Luftschnittstelle" übertragen werden. Weiterhin wird es vorteilhafterweise ermöglicht, schnell und einfach z.B. neue, weiterentwickelte oder bisher noch nicht angewendete Verfahren zur Identifikation des Kommunikationsendgerätes bzw. dessen Nutzers, sowie zur Identifikation des Anwendungsprogrammes einzusetzen, ohne daß dazu Änderungen am Zahlungssystem notwendig werden.

Das Verfahren kann erfindungsgemäß derart ausgestaltet sein, dass als erstes Kommunikationsprotokoll ein Kommunikationsprotokoll verwendet wird, welches zur Datenübertragung mittels elektromagnetischer Funkwellen vorgesehen ist. Dadurch wird eine Datenübertragung zwischen dem mobilen Kommunikationsendgerät und einem ortsfest in einem Kommunikationsnetz installierten Server ermöglicht.

Das Verfahren kann so ablaufen, dass als zweites Kommunikationsprotokoll ein Kommunikationsprotokoll verwendet wird, welches zur Datenübertragung zu dem Zahlungssystem des Kommunikationsnetzes vorgesehen ist. Dadurch können vorteilhafterweise als solche bereits bekannte Kommunikationsprotokolle verwendet werden, welche in Kommunikationsnetzen üblicherweise zur Kommunikation mit Zahlungssystemen verwendet werden. Insbesondere ist es nicht notwendig, ein neues Kommunikationsprotokoll auf dem Zahlungssystem bereitzustellen, welches eine drahtlose Kommunikation zwischen dem mobilen Kommunikationsendgerät und dem (üblicherweise ortsfesten) Zahlungssystem des Kommunikationsnetzes ermöglicht.

Das Verfahren kann so ablaufen, dass von dem Server vor dem Übertragen der Zahlungsdaten an das Zahlungssystem überprüft wird, ob serverseitig von dem Kommunikationsendgerät (bzw. von dessen Nutzer) stammende Genehmigungsdaten empfangen wurden, welche den Zahlvorgang betreffen, und bei Vorliegen der Genehmigungsdaten die Zahlungsdaten an das Zahlungssystem übertragen werden. Dadurch wird z.B. eine seitens eines fehlerhaften Anwendungsprogramms ausgelöste, seitens des Nutzers des Kommunikationsendgerätes aber unerwünschte Übertragung von Zahlungsdaten an das Zahlungssystem verhindert. Fehler des Anwendungsprogramms können beispielsweise auch durch Programm-Viren verursacht sein.

Das Verfahren kann dabei so ablaufen, dass von dem Server eine Aufforderungsnachricht an das Kommunikationsendgerät gesendet wird, mit welcher das Kommunikationsendgerät aufgefordert wird, die Genehmigungsdaten an den Server zu senden. Damit wird bei nicht vorliegenden Genehmigungsdaten das Kommunikationsendgerät angeregt, solche Genehmigungsdaten an den Server zu senden.

Das erfindungsgemäße Verfahren kann auch so ablaufen, dass auf eine Trennung der Datenverbindung zwischen dem Kommunikationsendgerät und dem Server hin von dem Server diese Datenverbindung wiederhergestellt wird. Damit wird vorteilhafterweise sichergestellt, dass auch bei einer - bei mobilen Kommunikationsendgeräten gelegentlich vorkommenden - Trennung der Datenverbindung das erfindungsgemäße Verfahren fortgeführt werden kann. Ein weiterer Vorteil besteht darin, dass das Wiederherstellen der Datenverbindung nicht von dem Zahlungssystem durchgeführt zu werden braucht, dadurch wird das Zahlungssystem wesentlich entlastet.

Das Verfahren kann auch derart ablaufen, dass von dem Server das Kommunikationsendgerät erkannt wird, indem der Server das Kommunikationsendgerät beschreibende Daten aus den Zahlungsdaten ausliest.

Das Verfahren kann auch so ablaufen, dass von dem Server das Anwendungsprogramm erkannt wird, indem der Server das Anwendungsprogramm beschreibende Daten aus den Zahlungsdaten ausliest. Die beiden vorgenannten Ausführungsvarianten des erfindungsgemäßen Verfahrens sind besonders einfache Varianten, um das Kommunikationsendgerät bzw. das Anwendungsprogramm zu erkennen (zu identifizieren).

Das Verfahren kann so ablaufen, dass durch den Server die in komprimierter Form gesendeten Zahlungsdaten dekomprimiert werden. Dadurch wird eine effektive Nutzung der bei mobilen Kommunikationsendgeräten oftmals beschränkten Datenübertragungskapazität (Übertragungsbandbreite) ermöglicht.

Bei dem Verfahren können die Zahlungsdaten paketorientiert übertragen werden.

Die oben genannte Aufgabe wird ebenfalls gelöst durch einen Server zum Übertragen von einen Zahlvorgang betreffenden Daten von einem mobilen Kommunikationsendgerät zu einem Zahlungssystem eines Kommunikationsnetzes, welcher unter Nutzung eines ersten Kommunikationsprotokolls Zahlungsdaten empfängt, welche von einem auf dem Kommunikationsendgerät laufenden Anwendungsprogramm stammen, das Kommunikationsendgerät erkennt, das Anwendungsprogramm erkennt, unter Nutzung eines zweiten Kommunikationsprotokolls die Zahlungsdaten an das Zahlungssystem überträgt, das Kommunikationsendgerät kennzeichnende Endgerätedaten an das Zahlungssystem überträgt, wodurch das Zahlungssystem über den Zahlungsschuldner informiert wird, und das Anwendungsprogramm kennzeichnende Programmdaten an das Zahlungssystem überträgt, wodurch das Zahlungssystem über den Zahlungsempfänger informiert wird.

Dieser Server kann so ausgestaltet sein, dass er vor dem Übertragen der Zahlungsdaten an das Zahlungssystem überprüft, ob serverseitig von dem Kommunikationsendgerät stammende Genehmigungsdaten empfangen wurden, welche den Zahlungsvorgang betreffen, und der bei Vorliegen der Genehmigungsdaten die Zahlungsdaten an das Zahlungssystem überträgt.

Der Server kann so gestaltet sein, dass er eine Aufforderungsnachricht an das Kommunikationsendgerät sendet, mit welcher das Kommunikationsendgerät aufgefordert wird, die Genehmigungsdaten an den Server zu senden. Der Server kann auf eine Trennung der Datenverbindung zwischen dem Kommunikationsendgerät und dem Server hin diese Datenverbindung wiederherstellen.

Der Server kann so ausgestaltet sein, dass er das Kommunikationsendgerät erkennt, indem er das Kommunikationsendgerät beschreibende Daten aus den Zahlungsdaten ausliest.

Der Server kann so realisiert sein, dass er das Anwendungsprogramm erkennt, indem er das Anwendungsprogramm beschreibende Daten aus den Zahlungsdaten ausliest.

Der Server kann so gestaltet sein, dass er die in komprimierter Form gesendeten Zahlungsdaten dekomprimiert.

Der Server kann die Zahlungsdatenpakete orientiert übertragen.

Der vorstehend genannte Server weist Vorteile auf, die denen entsprechen, welche zuvor im Zusammenhang mit dem erfindungsgemäßen Verfahren genannt worden sind.

Zur weiteren Erläuterung sind in den Figuren Ausführungsbeispiele der Erfindung dargestellt. Dabei ist in
Figur 1 ein Ausführungsbeispiel einer Anordnung mit einem mobilen Kommunikationsendgerät, einem Server und zwei Zahlungssystemen und in
Figur 2 ein Ausführungsbeispiel eines Nachrichtenflusses des erfindungsgemäßen Verfahrens dargestellt.

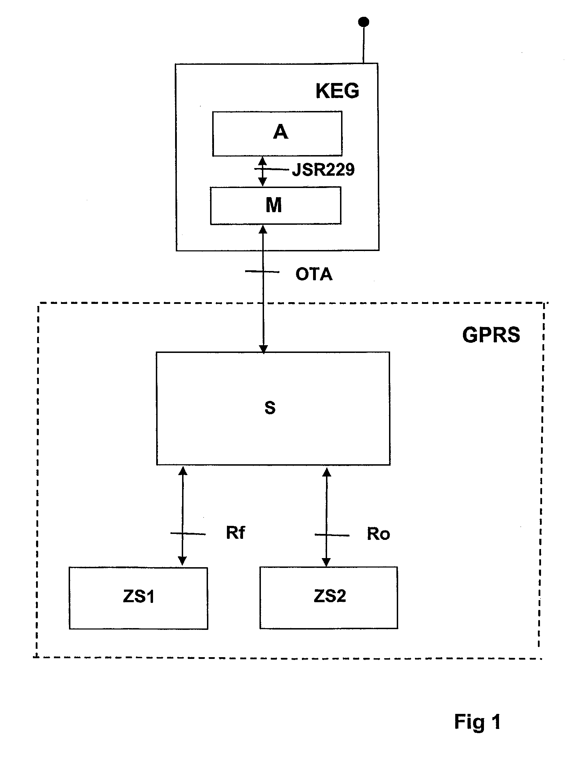

In Figur 1 ist ein mobiles Kommunikationsendgerät KEG dargestellt, bei dem es sich beispielsweise um ein Mobiltelefon, einen Palmtop oder einen tragbaren Rechner (Laptop) mit Mobilfunkschnittstelle handelt. In diesem mobilen Kommunikationsendgerät KEG ist ein Anwendungsprogramm A (application program) installiert. Dieses Anwendungsprogramm A kann sich beispielsweise im Arbeitsspeicher (RAM) oder in einem Festwertspeicher (z.B. Flash-ROM) befinden. Das Anwendungsprogramm A kommuniziert über eine Programmschnittstelle (API = Application Programming Interface, z. B. über das an sich bekannte Interface JSR229) mit einem Zahlungsmodul M (Payment module) des Kommunikationsendgerätes. Das Zahlungsmodul M des Kommunikationsendgerätes KEG kommuniziert mittels eines zur Datenübertragung mittels elektromagnetischer Funkwellen vorgesehenen Kommunikationsprotokolls (OTA- Kommunikationsprotokoll) mit einem Server S eines Kommunikationsnetzes GPRS. Die Abkürzung OTA steht hierbei für "Over The Air" und bezeichnet ein Kommunikationsprotokoll, welches zur Datenübertragung z.B. in Mobilfunknetzen zwischen den mobilen Endgeräten und den ortsfesten Einrichtungen der Mobilfunknetze genutzt wird. Als ein derartiges OTA-Protokoll können beispielsweise die folgenden Protokolle genutzt werden: das WAP-Protokoll (WAP = Wireless Application Protocol), das SOAP-Protokoll (SOAP = simple object access protocol) oder das SIP-Protokoll (SIP = Session Initiation Protocol).

Der Server S des Kommunikationsnetzes ist in Form eines Proxy-Servers realisiert, der auch als ein "Zahlungs-Proxy-Server" (charging proxy) bezeichnet wird. Der Server S wird z.B. von einem Betreiber desjenigen Kommunikationsnetzes betrieben, in dem sich das Zahlungssystem befindet. Der Server S ist über eine an sich bekannte Schnittstelle Rf mit einem ersten Zahlungssystem ZS1 verbunden. Bei dem ersten Zahlungssystem ZS1 handelt es sich im um ein Zahlungssystem, bei welchem eingehende Zahlungsaufforderungen registriert und zu einem späteren Zeitpunkt abgerechnet werden (indem beispielsweise eine Rechnung erstellt und an den Zahlungsschuldner gesendet wird). Derartige Zahlungssysteme als solche sind bekannt und werden auch als "post-processing-Zahlungssysteme" oder "offline-charging-systems" bezeichnet.

Weiterhin ist der Server S über eine an sich bekannte Schnittstelle Ro mit einem zweiten Zahlungssystem ZS2 verbunden. Durch dieses zweite Zahlungssystem ZS2 werden eingehende Zahlungsaufforderungen sofort abgerechnet, in dem die entsprechenden Zahlbeträge beispielsweise von einem Guthabenkonto des Zahlungsschuldners abgebucht werden. Solche Zahlungssysteme werden auch als "prepaid-charging-systems" oder "online-charging-systems" bezeichnet. Die Schnittstellen Rf und Ro zur Kommunikation mit dem ersten Zahlungssystem ZS1 bzw. mit dem zweiten Zahlungssystem ZS2 als solche sind beispielsweise aus der Schrift 3GPP TS 32.240; Technical Specification; 3rd Generation Partnership Project; Technical Specification Group Services and System Aspects; Telecommunication management; Charging management; Charging architecture and principles (Release 6) bekannt.

Der Server S sorgt dafür, dass beim Empfang der von dem mobilen Kommunikationsendgerät abgesendeten Daten die von dem OTA-Protokoll angebotenen Protokollfunkionen (z. B. Verschlüsselung, Kompression oder Wiederaufnahme der Kommunikation nach zeitweisem Verlust der Verbindung) genutzt werden. Dies hat den Vorteil, dass die Zahlungssysteme nicht mit den oftmals komplizierten Abläufen bei der Realisierung von Datenübertragungen mittels eines solchen OTA-Protokolls belastet werden. Das Zahlungssystem ZS2 empfängt vielmehr die von dem mobilen Kommunikationsendgerät gesendeten Zahlungsdaten unter Nutzung eines zweiten Kommunikationsprotokolls über die übliche Schnittstelle Ro; das Zahlungssystem ZS1 empfängt Zahlungsdaten über die übliche Schnittstelle Rf.

Im Ausführungsbeispiel ist als Kommunikationsnetz ein nach GPRS-Vorgaben aufgebautes Mobilfunknetz angegeben (GPRS = general packet radio service). Das beschriebene Verfahren und der beschriebene Server kann jedoch auch in anderen Kommunikationsnetzen realisiert werden, beispielsweise in Mobilfunknetzen nach dem GSM- oder dem UMTS-Standard. Insbesondere können solche Kommunikationsnetze verwendet werden, in denen die Daten paketorientiert übertragen werden, wie z. B. das Internet.

In Figur 1 wurden aus Gründen der Übersichtlichkeit beispielsweise die in Mobilkommunikationsendgeräten und den zugehörigen Kommunikationsnetzen stets vorhandenen Sende- und Empfangseinrichtungen nicht dargestellt.

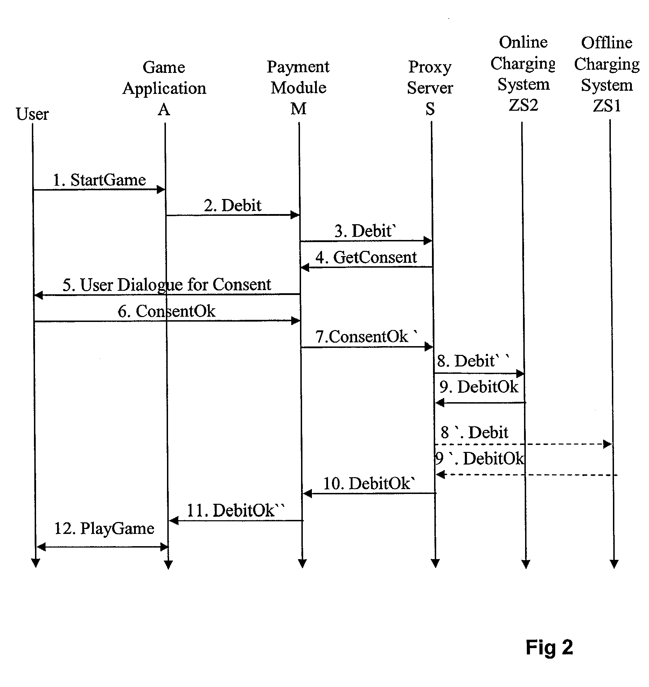

In Figur 2 ist ein Ausführungsbeispiel eines Verfahrensablaufes unter Nutzung der in Figur 1 abgebildeten Elemente dargestellt.

Bei diesem Ausführungsbeispiel wird davon ausgegangen, dass ein Nutzer (User) des Kommunikationsendgerätes KEG ein Anwendungsprogramm A in Form eins Spielprogramms (game application) in sein mobiles Kommunikationsendgerät geladen hat. Der Nutzer kann dieses Spielprogramm beispielsweise über das Internet von einem Spieleanbieter per "download" erhalten haben, wobei der "download" kostenfrei oder kostenpflichtig erfolgen kann. Der Nutzer startet das Spielprogramm lokal im Speicher seines Kommunikationsendgeräts; das Spiel läuft lokal auf diesem Kommunikationsendgerät ab. Für die lokale Durchführung des Spieles als solche ist keine Interaktion mit anderen Kommunikationsendgeräten oder Einrichtungen des Spieleanbieters notwendig. Die Nutzung des Anwendungsprogramms in Form des Spielprogramms soll nutzungsbezogen abgerechnet werden; im Ausführungsbeispiel soll bei jeder Nutzung es Spiels ein Zahlbetrag fällig und abgerechnet werden. Dieses Zahlungsverfahren wird auch als "pay-per-play"-Verfahren oder als "pay-per-use"-Verfahren bezeichnet.

Nachdem das Spielprogramm A auf dem Kommunikationsendgerät KEG gestartet wurde (vgl. Pfeil 1: StartGame; Spielstart) erzeugt das Anwendungsprogramm A eine Zahlungsaufforderungsnachricht und sendet diese Zahlungsaufforderungsnachricht über die Programmschnittstelle JSR229 an das Zahlungsmodul M (Pfeil 2: Debit; Abbuchung). Diese Zahlungsaufforderungsnachricht enthält beispielsweise Informationen über den zu zahlenden Betrag (z. B. Zahlungsbetrag 1 Euro), Informationen über den der Zahlung zugrundeliegenden Vorgang (z. B. Schachspiel, Level 3), die aktuelle Zeit (Zeitstempel), ein das Kommunikationsendgerät kennzeichnendes Endgerätedatum (z. B. die Geräteidentifikation IMEI = International Mobile Equipment Identity oder eine Nutzeridentifikation z. B. in Form der Mobilfunkrufnummer MSIDN) sowie das Anwendungsprogramm kennzeichnende Programmdaten (z. B. Programmname, Programmversion und/oder (optional) Programmanbieter). Diese Daten bzw. Informationen werden von dem Anwendungsprogramm A mittels der Zahlungsaufforderungsnachricht an das Zahlungsmodul M übertragen.

Das Zahlungsmodul M empfängt die Daten von dem Anwendungsprogramm A und erzeugt daraus eine Zahlnachricht (Pfeil 3: Debit'; Abbuchung'). Diese Zahlungsdaten enthaltende Zahlnachricht wird von dem Zahlungsmodul M unter Nutzung eines ersten Kommunikationsprotokolls in Form des OTA-Protokolls über eine nicht dargestellte Sendeeinrichtung des Kommunikationsendgerätes KEG und eine nicht dargestellte Empfangseinrichtung des Kommunikationsnetzes GPRS an den Server S des Kommunikationsnetzes gesendet. Dazu wird die Zahlnachricht z.B. wird mit einer IP-Adresse des Servers, einer SIP-Adresse des Servers oder einer Telefonnummer des Servers (z.B. einer E164-Telefonnummer) adressiert. Die Zahlnachricht enthält weiterhin die Aufforderung, den Zahlbetrag von einem Guthabenkonto des Nutzers abbuchen zu lassen (online charging).

Alternativ kann das beschriebene Verfahren auch so ablaufen, dass die das Anwendungsprogramm kennzeichnenden Programmdaten und/oder die das Kommunikationsendgerät kennzeichnenden Endgerätedaten nicht von dem Anwendungsprogramm A mittels der Zahlungsaufforderungsnachricht zu dem Zahlungsmodul M übertragen werden, sondern dass das Zahlungsmodul M diese Daten eigenständig von dem Kommunikationsendgerät oder dem Anwendungsprogramm abfragt und in die Zahlnachricht (Debit') einfügt. Da das Zahlungsmodul M in dem mobilen Kommunikationsendgerät installiert ist (und beispielsweise einen Teil des Betriebssystems darstellt), wird das Zahlungsmodul als vertrauenswürdig (trustworthy) eingestuft, so dass die von dem Zahlungsmodul ermittelten Endgerätedaten und Programmdaten zur Durchführung des Zahlungsvorganges verwendet werden können.

Der Server S empfängt unter Nutzung des OTA-Protokolls die Zahlnachricht Debit' mit den Zahlungsdaten. Der Server S stellt sicher, dass die mittels des OTA-Kommunikationsprotokolls durchgeführte Kommunikation mit dem mobilen Kommunikationsendgerät protokollkonform stattfindet. Sollte beispielsweise die Datenverbindung zwischen dem Kommunikationsendgerät und dem Server unterbrochen werden (was bei mobilen Kommunikationsendgeräten gelegentlich auftritt), so stellt der Server diese Datenverbindung wieder her. Weiterhin führt der Server eine Dekomprimierung der mittels des OTA-Protokolls in komprimierter Form gesendeten Zahlungsdaten der Zahlnachricht Debit' aus.

Nachdem der Server S unter Nutzung des OTA-Protokolls die Zahlnachricht Debit' mit den Zahlungsdaten empfangen hat, erkennt (identifiziert) der Server S das Kommunikationsgerät Kommunikationsendgerät. Dies geschieht, indem der Server S die das Kommunikationsendgerät KEG beschreibenden Daten (beispielsweise die Geräteidentifikationsdaten IMEI) aus den Zahlungsdaten der Zahlnachricht Debit' ausliest. Weiterhin erkennt (identifiziert) der Server S das Anwendungsprogramm A, indem er die das Anwendungsprogramm beschreibenden Daten (z. B. Programmname und Programmversion) aus den Zahlungsdaten der Zahlnachricht ausliest.

Optional kann der Server S zusätzlich das Kommunikationsendgerät und/oder das Anwendungsprogramm authentifizieren, d. h. feststellen, ob die mit der Zahlnachricht mitgesendeten Endgerätedaten bzw. Programmdaten korrekt sind. Dies kann beispielsweise erfolgen, indem der Server digitale Signaturen überprüft, welche mit der Zahlnachricht mitgesendet worden sind.

Optional kann der Server beispielsweise unter Nutzung von im Kommunikationsnetz vorhandenen Datenbanken (z. B. des HLR, home location register) überprüfen, ob die mit der Zahlnachricht übermittelten Daten konsistent sind, ob also beispielsweise das Kommunikationsendgerät mit den Endgerätedaten IMEI tatsächlich dem Nutzer mit der Mobilfunkrufnummer MSISDN zugeordnet ist und/oder ob das Anwendungsprogramm A als ein zur Sendung von Zahlnachrichten berechtigtes Anwendungsprogramm registriert ist.

Bei hohen Zahlbeträgen oder auch generell kann als eine zusätzliche Sicherungsmaßnahme vorgesehen sein, dass vor dem Übertragen der Zahlungsdaten an das Zahlungssystem von dem Server überprüft wird, ob der Server von dem Kommunikationsendgerät KEG stammende Genehmigungsdaten empfangen hat, welche den Zahlvorgang betreffen. Nur bei Vorliegen solcher Genehmigungsdaten werden dann die Zahlungsdaten an das Zahlungssystem übertragen. Wenn solche Genehmigungsdaten nicht bei dem Server S vorliegen, dann sendet der Server S eine Aufforderungsnachricht (Pfeil 4: GetConsent; Einverständnis einholen) an das Kommunikationsendgerät KEG. Mittels dieser Aufforderungsnachricht wird das Kommunikationsendgerät aufgefordert, die Genehmigungsdaten an den Server zu senden. (Dabei kann bei entsprechender nutzerseitiger Konfiguration des Kommunikationsendgerätes vorgesehen sein, dass das Kommunikationsendgerät die Genehmigungsdaten erst dann sendet, nachdem der Nutzer diese Genehmigungsdaten für den Bezahlvorgang explizit freigegeben hat, z.B. über einen Dialog mittels Display und Tastatur des Kommunikationsendgerätes.)

Der Server S sendet die Aufforderungsnachricht (Pfeil 4) an das Zahlungsmodul M. Die Aufforderungsnachricht enthält z. B. den geforderten Zahlbetrag und das Ereignis, welches der Zahlung zugrundeliegt ("Schachspiel, 1 Euro").

Das Zahlungsmodul M startet nun einen Dialog mit dem Nutzer des Kommunikationsendgerätes, beispielsweise über Textausgaben auf dem Display des Kommunikationsendgerätes oder über die Ausgabe einer Sprachmeldung über einen eingebauten Lautsprecher des Kommunikationsendgerätes (Pfeil 5: User Dialogue for Consent; Nutzerdialog wegen Einverständnis). Mit diesem Nutzerdialog wird der Nutzer darüber informiert, dass das Anwendungsprogramm einen Zahlvorgang initiiert bzw. gestartet hat. Mit dem Nutzerdialog wird der Nutzer aufgefordert, sein Einverständnis zu dem Zahlvorgang und zu dem Zahlbetrag zu dokumentieren, indem er beispielsweise eine Taste des Kommunikationsendgeräts betätigt oder mit einer Sprach-Antwort ("ich akzeptiere") sein Einverständnis ausdrückt (Pfeil 6: ConsentOk; Einverständnis liegt vor). Bei vorliegenden Einverständnis sendet das Zahlungsmodul M Genehmigungsdaten über das empfangene Einverständnis des Nutzers in Form einer Genehmigungsnachricht (Pfeil 7: ConsentOk') unter Nutzung des OTA-Protokolls an den Server S. Damit liegen nun bei dem Server S die Genehmigungsdaten vor, welche den Zahlvorgang betreffen.

(In einem anderen Ausführungsbeispiel können von dem Server S die Genehmigungsdaten auch angefordert werden, in dem der Server S eine (in den Figuren nicht dargestellte) Spracheinheit des Kommunikationsnetzes (beispielsweise realisiert durch eine Einheit IP = Intelligent Peripheral) auffordert, einen Sprach-Telefonanruf (voice call) an das Kommunikationsendgerät zu richten. Die Einheit IP würde in diesem Fall die Antwort des Nutzers registrieren, auswerten und - bei vorliegendem Einverständnis - die Genehmigungsdaten an den Server S senden.

Weitere Varianten zum Erlangen der Genehmigungsdaten seitens des Servers S sind möglich. Ihnen gemeinsam ist, dass der Server überprüft, ob solche Genehmigungsdaten bereits vorliegen und bei Nichtvorliegen der Genehmigungsdaten einen Dialog mit dem Nutzer des Kommunikationsendgerätes auslöst; im Ergebnis dieses Dialoges werden die Genehmigungsdaten an den Server übertragen.)

Im Ausführungsbeispiel liegen nun die Genehmigungsdaten bei dem Server S vor. Daraufhin sendet der Server S die Zahlungsdaten mittels einer Zahlungsnachricht (Pfeil 8: Debit " ; Abbuchung") unter Nutzung der Schnittstelle Ro und unter Nutzung eines (zweiten) Kommunikationsprotokolls, welches zur Datenübertragung zu dem Zahlungssystem ZS2 vorgesehen ist, an das zweite Zahlungssystem ZS2. Als ein solches zweites Kommunikationsprotokoll kann beispielsweise das als solches bekannte Kommunikationsprotokoll DIAMETER oder das Kommunikationsprotokoll RADIUS eingesetzt werden. Mit der Zahlungsnachricht (Pfeil 8) wird das Zahlungssystem ZS2 angewiesen, den Zahlbetrag von dem Guthabenkonto des Nutzers abzubuchen.

Mit der Zahlungsnachricht (Pfeil 8.: Debit") werden auch die das Kommunikationsendgerät KEG kennzeichnenden Endgerätedaten und/oder die das Anwendungsprogramm kennzeichnenden Programmdaten an das Zahlungssystem ZS2 übertragen. Anhand der Endgerätedaten ermittelt das Zahlungssystem den Zahlungsschuldner, in dem beispielsweise das Zahlungssystem aus einer Datenbank den Namen und die Kontonummer des Besitzers bzw. Nutzers des Kommunikationsendgerätes ausliest. In dieser Datenbank ist eine Zuordnung der Endgerätedaten (z. B. der IMEI-Nummer) zu dem Namen des Besitzers oder Nutzers und zu dessen Konto abgespeichert. Mittels der das Anwendungsprogramm kennzeichnenden Programmdaten (beispielsweise Programmname und Programmversion) ermittelt das Zahlungssystem den Zahlungsempfänger, in dem das Zahlungssystem beispielsweise aus einer Datenbank den Namen des diesem Anwendungsprogramm zugeordneten Zahlungsempfängers sowie dessen Kontonummer ausliest. In dieser Datenbank sind Zuordnungen zwischen Anwendungsprogrammen und den jeweiligen Personen oder Institutionen gespeichert, welche die Anwendungsprogramme den Nutzern zugänglich machen und dafür bei Nutzung der Anwendungsprogramme Zahlungen erhalten. (Wenn mit den Programmdaten bereits eine Information über den Programmanbieter übermittelt wurde, dann kann diesbezüglich auf das Auslesen der Datenbank verzichtet werden.) In der Datenbank sind auch Zuordnungen zu den Konten dieser Personen oder Institutionen sowie Informationen über den mittels des Anwendungsprogramms zu erbringenden Dienst, Anwendung oder Leistung abgespeichert. Dadurch wird das Zahlungssystem durch die Programmdaten auch über den zu bezahlenden Dienst, Anwendung oder Leistung informiert.

Anhand der empfangenen Zahlungsdaten, Endgerätedaten und/oder Programmdaten bucht daraufhin das zweite Zahlungssystem ZS2 den entsprechenden Zahlbetrag von dem Guthabenkonto des Zahlungsschuldners ab und bucht den Zahlbetrag (entweder sofort oder später) auf ein Konto des Zahlungsempfängers auf.

Bei einer erfolgreichen Abbuchung (z. B. wenn das Guthabenkonto eine ausreichende Kontenstandshöhe aufweist) sendet das zweite Zahlungssystem ZS2 eine Bestätigungsnachricht (Pfeil 9: DebitOk; Abbuchung erfolgreich) an den Server S zurück. Der Server S sendet die Information über die erfolgreiche Abbuchung unter Nutzung des OTA-Protokolls mittels einer weiteren Bestätigungsnachricht (Pfeil 10: DebitOk'; Abbuchung erfolgreich') an das Zahlungsmodul M weiter. Das Zahlungsmodul M sendet daraufhin die Information über die erfolgreiche Abbuchung unter Nutzung der Programmschnittstelle JSR229 an das Anwendungsprogramm A weiter (Pfeil 11: DebitOk " ; Abbuchung erfolgreich "). Damit wird dem Anwendungsprogramm A mitgeteilt, dass der Zahlvorgang erfolgreich ausgeführt wurde. (Optional kann das Zahlungsmodul M zusätzlich auch dem Nutzer mitteilen, dass der Zahlvorgang erfolgreich abgeschlossen wurde.) Daraufhin ermöglicht das Anwendungsprogramm dem Nutzer die Programmnutzung; im Ausführungsbeispiel kann der Nutzer mit dem Computerspiel spielen. Die Nutzung kann eingeschränkt sein, beispielsweise auf eine vom Zahlbetrag abhängende Zeitdauer oder auf eine vorgegebene Anzahl von Programmereignissen (beispielsweise eine Anzahl von Schachrunden), für die der Zahlbetrag ausreicht.

In einem alternativen Ausführungsbeispiel kann das Einholen des Einverständnisses des Nutzers ("GetConsent") auch von dem Zahlungsmodul M durchgeführt werden, in dem dieses Zahlungsmodul M beispielsweise eine JSR229-Methode benutzt. In diesem alternativen Ausführungsbeispiel würde das Zahlungsmodul M erst bei Vorliegen der Genehmigungsdaten bei dem Zahlungsmodul die Zahlnachricht (Pfeil 3: Debit') an den Server S senden.

In einem weiteren Ausführungsbeispiel kann der Zahlvorgang auch unter Nutzung des ersten Zahlungssystems ZS1 (offline charging system) durchgeführt werden, wie in Figur 2 mittels der gestrichelten Pfeile 8' und 9' dargestellt ist. Dabei sendet der Server S anstelle der Zahlungsnachricht (Pfeil 8: Debit ") eine Zahlungsnachricht (Pfeil 8': Debit) an das erste Zahlungssystem ZS1. Das erste Zahlungssystem ZS1 schreibt die Zahlungsdaten in eine Datenbank oder in einen Gebührendatensatz ein, um z. B. bei der nächsten Rechnungserstellung den entsprechenden Zahlbetrag auf eine den Zahlungsschuldner betreffende Rechnung zu setzen. Daraufhin sendet das erste Zahlungssystem ZS1 eine entsprechende Bestätigungsnachricht (Pfeil 9': DebitOk) an den Server S zurück. Bei diesem Ausführungsbeispiel würde die Zahlnachricht (Pfeil 3) beispielsweise die Aufforderung enthalten, den Zahlbetrag in einem Gebührendatensatz zur Einbeziehung in die nächstmögliche Monatsrechnung aufzuzeichnen.

Es wurde ein Verfahren zum Übertragen von einem Zahlvorgang betreffenden Daten von einem mobilen Kommunikationsendgerät zu einem Zahlungssystem eines Kommunikationsnetzes beschrieben, bei dem ein Server (Proxy Server) ortsfest in einem Kommunikationsnetz (z. B. Mobilfunknetz) angeordnet ist. Dieser Server sammelt die Zahlungsdaten, welche von dem mobilen Kommunikationsendgerät stammen. Diese unter Nutzung eines OTA-Protokolls mittels sogenannter "charging requests" von dem mobilen Kommunikationsendgerät abgesendeten Zahlungsdaten werden von dem Server weitergesendet unter Nutzung eines Kommunikationsprotokolls, welches in dem Kommunikationsnetz zur Kommunikation mit einem dort installierten Zahlungssystem verwendet wird. Ein Beispiel für ein derartiges Protokoll ist das DIAMETER-Protokoll. Weiterhin führt der Server S unter Nutzung des OTA-Protokolls die Kommunikation mit dem mobilen Kommunikationsendgerät sowie optional eine Identifikation und/oder eine Authentifizierung des Kommunikationsendgerätes und/oder des Anwendungsprogramms durch.

Eine wesentliche Aufgabe des Zahlungsmoduls M des mobilen Kommunikationsendgerätes KEG besteht darin, dass dieses Modul die von dem Anwendungsprogramm A empfangenden Daten mittels einer Zahlnachricht (charging message) an den Server S weiterleitet.

Durch den Server S werden die Zahlungs-Systeme ZS1 und ZS2 entlastet, weil der Server S die Identifizierung und/oder Authentifizierung des Kommunikationsendgerätes und des Anwendungsprogramms durchführt und dafür sorgt, dass das Einverständnis des Nutzers (Consent) eingeholt wird. Die Zahlungssysteme werden also nicht mit diesen Funktionen belastet.

Bei dem beschriebenen Verfahren und dem beschriebenen Server ist besonders vorteilhaft, dass durch den Server S die von einem mobilen Kommunikationsendgerät stammenden Zahlnachrichten so konvertiert werden, dass diese mit den üblichen Standardschnittstellen der Zahlungssysteme des Kommunikationsnetzes kompatibel sind. Dadurch können die in Kommunikationsnetzen üblichen Zahlungssysteme (welche dort beispielsweise zur Abrechnung der normalen Telefongebühren vorgesehen sind) auch dazu genutzt werden, solche sogenannten "terminal initiated charging request" zu bearbeiten und entsprechende Zahlvorgänge auszuführen. Beispielsweise können solche von einem Mobiltelefon initiierten Zahlungsanforderungen bzw. Zahlnachrichten zu einem Zahlvorgang führen, bei dem der entsprechende Zahlbetrag auf die normale Telefonrechnung eines Kommunikationsendgerätenutzers gebucht wird. Bei dem beschriebenen Verfahren ist weiterhin vorteilhaft, dass auf Seiten des Kommunikationsnetzes lediglich ein Server S installiert zu werden braucht, was mit einem geringen Kostenaufwand möglich ist. Insbesondere ist es nicht notwendig, Modifikationen an den Zahlungssystemen oder an den Schnittstellen der Zahlungssysteme vorzunehmen. Dadurch wird z. B. dem Netzwerkoperator ermöglicht, die bereits existierenden Zahlungssysteme und die bereits existierenden Schnittstellen der Zahlungssysteme auch zum Vergebühren von solchen Ereignissen zu nutzen, welche von einem mobilen Kommunikationsendgerät ausgelöst werden. Solche Ereignisse sind beispielsweise das Ablaufenlassen von Software-Programmen lokal in einem Speicher eines mobilen Kommunikationsendgerätes oder bestimmte Bedienhandlungen eines Nutzers des Kommunikationsendgerätes, welche das lokal ablaufende Anwendungsprogramm betreffen. Dadurch ist es möglich, derartige "terminal initiated charging events" auf eine besonders einfache und kostengünstige Art und Weise abzurechnen bzw. zu vergebühren.

Im Ausführungsbeispiel wurde als Anwendungsprogramm ein Spiel-Programm beschrieben. In anderen Ausführungsbeispielen können als ein derartiges Anwendungsprogramm aber auch eine Vielzahl von anderen auf einem mobilen Kommunikationsendgerät laufenden Programmen genutzt werden, z. B. ein MP3-Player-Programm.

## Patentansprüche

1. Verfahren zum Übertragen von einen Zahlvorgang betreffenden Daten von einem mobilen Kommunikationsendgerät (KEG) zu einem Zahlungssystem (ZS1, ZS2) eines Kommunikationsnetzes (GPRS), wobei bei dem Verfahren
- von einem Server (S) des Kommunikationsnetzes (GPRS) unter Nutzung eines ersten Kommunikationsprotokolls (OTA) Zahlungsdaten empfangen werden, welche von einem auf dem Kommunikationsendgerät (KEG) laufenden Anwendungsprogramm (A) stammen,
- von dem Server (S) das Kommunikationsendgerät (KEG) erkannt wird,
- von dem Server (S) das Anwendungsprogramm (A) erkannt wird,
- von dem Server (S) unter Nutzung eines zweiten Kommunikationsprotokolls die Zahlungsdaten an das Zahlungssystem (ZS2) übertragen werden,
- von dem Server (S) das Kommunikationsendgerät (KEG) kennzeichnende Endgerätedaten an das Zahlungssystem (ZS2) übertragen werden, wodurch das Zahlungssystem (ZS2) über den Zahlungsschuldner informiert wird, und
- von dem Server (S) das Anwendungsprogramm (A) kennzeichnende Programmdaten an das Zahlungssystem (ZS2) übertragen werden, wodurch das Zahlungssystem (ZS2) über den Zahlungsempfänger informiert wird.

2. Verfahren nach Anspruch 1,
**dadurch gekennzeichnet, dass**
- als erstes Kommunikationsprotokoll ein Kommunikationsprotokoll (OTA) verwendet wird, welches zur Datenübertragung mittels elektromagnetischer Funkwellen vorgesehen ist.

3. Verfahren nach Anspruch 1 oder 2,
**dadurch gekennzeichnet, dass**
- als zweites Kommunikationsprotokoll ein Kommunikationsprotokoll verwendet wird, welches zur Datenübertragung zu dem Zahlungssystem (ZS2) des Kommunikationsnetzes (GPRS) vorgesehen ist.

4. Verfahren nach einem der vorhergehenden Ansprüche,
**dadurch gekennzeichnet, dass**
- von dem Server (S) vor dem Übertragen der Zahlungsdaten an das Zahlungssystem (ZS2) überprüft wird, ob serverseitig (S) von dem Kommunikationsendgerät (KEG) stammende Genehmigungsdaten empfangen wurden, welche den Zahlvorgang betreffen, und
- bei Vorliegen der Genehmigungsdaten die Zahlungsdaten an das Zahlungssystem (ZS2) übertragen (8) werden.

5. Verfahren nach Anspruch 4,
**dadurch gekennzeichnet, dass**
- von dem Server (S) eine Aufforderungsnachricht (4) an das Kommunikationsendgerät (KEG) gesendet wird, mit welcher das Kommunikationsendgerät (KEG) aufgefordert wird, die Genehmigungsdaten an den Server (S) zu senden.

6. Verfahren nach einem der vorhergehenden Ansprüche,
**dadurch gekennzeichnet, dass**
- auf eine Trennung der Datenverbindung zwischen dem Kommunikationsendgerät (KEG) und dem Server (S) hin von dem Server (S) diese Datenverbindung wiederhergestellt wird.

7. Verfahren nach einem der vorhergehenden Ansprüche,
**dadurch gekennzeichnet, dass**
- von dem Server (S) das Kommunikationsendgerät (KEG) erkannt wird, indem der Server (S) das Kommunikationsendgerät (KEG) beschreibende Daten aus den Zahlungsdaten ausliest.

8. Verfahren nach einem der vorhergehenden Ansprüche,
**dadurch gekennzeichnet, dass**
- von dem Server (S) das Anwendungsprogramm (A) erkannt wird, indem der Server (S) das Anwendungsprogramm beschreibende Daten aus den Zahlungsdaten ausliest.

9. Verfahren nach einem der vorhergehenden Ansprüche,
**dadurch gekennzeichnet, dass**
- durch den Server (S) die in komprimierter Form gesendeten Zahlungsdaten dekomprimiert werden.

10. Verfahren nach einem der vorhergehenden Ansprüche,
**dadurch gekennzeichnet, dass**
- die Zahlungsdaten paketorientiert übertragen werden.

11. Server (S) zum Übertragen von einen Zahlvorgang betreffenden Daten von einem mobilen Kommunikationsendgerät (KEG) zu einem Zahlungssystem (ZS2) eines Kommunikationsnetzes (GPRS), welcher
- unter Nutzung eines ersten Kommunikationsprotokolls (OTA) Zahlungsdaten empfängt, welche von einem auf dem Kommunikationsendgerät (KEG) laufenden Anwendungsprogramm (A) stammen,
- das Kommunikationsendgerät (KEG) erkennt,
- das Anwendungsprogramm (A) erkennt,
- unter Nutzung eines zweiten Kommunikationsprotokolls die Zahlungsdaten an das Zahlungssystem (ZS2) überträgt,
- das Kommunikationsendgerät (KEG) kennzeichnende Endgerätedaten an das Zahlungssystem (ZS2) überträgt, wodurch das Zahlungssystem (ZS2) über den Zahlungsschuldner informiert wird, und
- das Anwendungsprogramm (A) kennzeichnende Programmdaten an das Zahlungssystem (ZS2) überträgt, wodurch das Zahlungssystem (ZS2) über den Zahlungsempfänger informiert wird.

12. Server nach Anspruch 11,
**dadurch gekennzeichnet, dass**
- er vor dem Übertragen der Zahlungsdaten an das Zahlungssystem (ZS2) überprüft, ob serverseitig (S) von dem Kommunikationsendgerät (KEG) stammende Genehmigungsdaten empfangen wurden, welche den Zahlungsvorgang betreffen, und
- er bei Vorliegen der Genehmigungsdaten die Zahlungsdaten an das Zahlungssystem überträgt (8).

13. Server nach Anspruch 11 oder 12,
**dadurch gekennzeichnet, dass**
- er eine Aufforderungsnachricht an das Kommunikationsendgerät (KEG) sendet (4), mit welcher das Kommunikationsendgerät (KEG) aufgefordert wird, die Genehmigungsdaten an den Server (S) zu senden (7).

14. Server nach einem der Ansprüche 11 bis 13,
**dadurch gekennzeichnet, dass**
- er auf eine Trennung der Datenverbindung zwischen dem Kommunikationsendgerät (KEG) und dem Server (S) hin diese Datenverbindung wiederherstellt.

15. Server nach einem der Ansprüche 11 bis 14,
**dadurch gekennzeichnet, dass**
- er das Kommunikationsendgerät (KEG) erkennt, indem er das Kommunikationsendgerät (KEG) beschreibende Daten aus den Zahlungsdaten ausliest.

16. Server nach einem der Ansprüche 11 bis 15,
**dadurch gekennzeichnet, dass**
- er das Anwendungsprogramm (A) erkennt, indem er das Anwendungsprogramm (A) beschreibende Daten aus den Zahlungsdaten ausliest.

17. Server nach einem der Ansprüche 11 bis 16,
**dadurch gekennzeichnet, dass**
- er die in komprimierter Form gesendeten Zahlungsdaten dekomprimiert.

18. Server nach einem der Ansprüche 11 bis 17,
**dadurch gekennzeichnet, dass**
- er die Zahlungsdaten paketorientiert überträgt.
